(19) Europäisches Patentamt
European Patent Office
Office européen des brevets

(11) **EP 2 929 177 B2**

(12) **NEUE EUROPÄISCHE PATENTSCHRIFT**
Nach dem Einspruchsverfahren

(45) Veröffentlichungstag und Bekanntmachung des
Hinweises auf die Entscheidung über den Einspruch:
**23.07.2025   Patentblatt 2025/30**

(45) Hinweis auf die Patenterteilung:
**03.08.2022   Patentblatt 2022/31**

(21) Anmeldenummer: **13791991.6**

(22) Anmeldetag: **13.11.2013**

(51) Internationale Patentklassifikation (IPC):
**F03D 1/06** (2006.01)

(52) Gemeinsame Patentklassifikation (CPC):
**F03D 1/0675; F03D 1/0633; F03D 13/10;**
F05B 2240/30; F05B 2260/96; Y02B 10/30;
Y02E 10/72; Y02P 70/50

(86) Internationale Anmeldenummer:
**PCT/EP2013/073753**

(87) Internationale Veröffentlichungsnummer:
**WO 2014/086564 (12.06.2014 Gazette 2014/24)**

(54) **WINDENERGIEANLAGE**

WIND POWER PLANT

ÉOLIENNE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität:   07.12.2012   DE 102012023896
              15.03.2013   DE 102013204637

(43) Veröffentlichungstag der Anmeldung:
**14.10.2015   Patentblatt 2015/42**

(73) Patentinhaber: **Wobben Properties GmbH
26607 Aurich (DE)**

(72) Erfinder: **ALTMIKUS, Andree
Aurich 26605 (DE)**

(74) Vertreter: **Eisenführ Speiser
Patentanwälte Rechtsanwälte PartGmbB
Postfach 10 60 78
28060 Bremen (DE)**

(56) Entgegenhaltungen:
EP-A1- 0 652 367          EP-A1- 1 314 885
EP-A2- 1 338 793          WO-A1-2012/019655
WO-A1-2012/071679        WO-A1-98/21091
WO-A2-2011/157849        DE-A1- 102011 051 329
DE-A1- 19 647 102         FR-A1- 2 863 319
US-A1- 2008 187 442       US-A1- 2011 142 668
US-A1- 2012 134 817

EP 2 929 177 B2

**Beschreibung**

Die vorliegende Erfindung betrifft die Ausbildung der Hinterkante eines Rotorblattes einer Windenergieanlage. Weiterhin betrifft die vorliegende Erfindung eine zackenförmige Hinterkante, die auch als Hinterkantenkamm bezeichnet wird. Außerdem betrifft die vorliegende Erfindung ein Rotorblatt einer Windenergieanlage sowie ein Verfahren zum Anbringen eines Hinterkantenkamms an einem Rotorblatt. Außerdem betrifft die vorliegende Erfindung eine Windenergieanlage mit Rotorblättern mit wenigstens einem Hinterkantenkamm.

Aus EP 0 652 367 A1 ist es bekannt, die Hinterkante in Längsrichtung des Hauptholms des Rotorblatts sägezahnförmig auszubilden. Hierdurch soll eine Geräuschreduktion erreicht werden.

Aus EP 1 019 632 ist es bekannt, dass der Grad der Verjüngung des Rotorblatts in Querrichtung des Hauptholms des Rotorblatts mit zunehmender Annäherung an die Hinterkante zunimmt. Auch hierdurch soll eine Geräuschreduktion erreicht werden.

Aus EP 1 314 885 B1 ist es bekannt, die Hinterkante in Längsrichtung des Hauptholms des Rotorblatts sägezahnförmig und gleichzeitig elastisch biegsam auszubilden. Hiermit soll eine Steigerung des Drehmoments erreicht werden, das das Rotorblatt auf den Generator ausübt.

Aus der europäischen Patentanmeldung EP 0 652 367 A1 ist es bekannt, eine gezackte Hinterkante an einem Rotorblatt vorzusehen, die bspw. als ein zahnförmiger Streifen 9 an 20 einem angeschrägten Teil des Rotorblatts befestigt wird. Weiter zeigen die Dokumente WO 2011/157849 A2, US 2008/0187442 A1 und EP 1 338 793 A2 Umsetzungen, wie eine gezackte Hinterkante an einem Rotorblatt angeordnet werden können soll.

Tatsächlich sind bisher praktisch keine Windenergieanlagen mit Rotorblättern mit zackenförmigen Hinterkanten aufgestellt worden, obwohl bspw. das Dokument EP 0 652 367 aus dem Jahre 1994 stammt. Ein Grund dafür dürfte daran liegen, dass Probleme in der praktischen Umsetzung bestehen. Hierbei sind insbesondere Probleme des Aufwandes der Kosten, der Qualität und der Dauerhaftigkeit zu berücksichtigen. Zudem kann das Nachrüsten von Hinterkantenkämmen an Rotorblättern bereits aufgestellter Anlagen oder an zumindest bereits existierenden Rotorblättern problematisch sein.

Der vorliegenden Erfindung liegt somit die Aufgabe zugrunde, wenigstens eins der o.g. Probleme zu adressieren. Aufgabe der Erfindung ist es insbesondere, die Montage einer sägezahnförmigen Hinterkante zu erleichtern. Zumindest soll eine alternative Ausführungsform vorgeschlagen werden.

Erfindungsgemäß wird zudem ein Verfahren gemäß Anspruch 1 vorgeschlagen. Dieses Verfahren richtet sich insbesondere an die Nachrüstung eines existierenden Rotorblattes, das eine aufgesetzte Hinterkante besitzt, nämlich eine gerade, also zackenlose, aufgesetzte Hinterkante, die als Profil ausgebildet ist. Hierbei wird von einer aufgesetzten Hinterkante ausgegangen, die einen Befestigungsabschnitt aufweist, mit dem diese gerade Hinterkante im Bereich einer Endkante an dem Rotorblatt angesetzt ist. Außerdem weist diese Hinterkante einen Endabschnitt auf, der diesen Befestigungsabschnitt abgewandt ist und zudem hin das Profil flach ausläuft. Dieser Endabschnitt weist also bezogen auf eine vorgesehene Bewegung des Rotorblatts nach hinten, also in die Richtung, in der im Betrieb Luft an dem Rotorblatt vorbeiströmt.

Außerdem wird von einer Hinterkante ausgegangen, die zwischen dem Befestigungsabschnitt und dem Endabschnitt angeordnet ist, mit einem Hohlraum zwischen der Saugseite und der Druckseite der Hinterkante.

Für ein Rotorblatt mit einer solchen Hinterkante wird nun eine Nachrüstung mit einem Hinterkantenkamm vorgeschlagen, der als Flachteil ausgebildet ist. Dieser Hinterkantenkamm weist also im Wesentlichen eine homogene Dicke oder Stärke auf und kann sich gemäß einer weiteren vorteilhaften Ausführung zur Hinterkante hin verjüngen. Ggf. können die Zacken des Hinterkantenkamms zu ihren Spitzen hin zusätzlich noch abgeflacht auslaufen, indem bei endlicher Dicke eine Fase mit einem Winkel $\alpha$ auf der Druckseite angebracht wird. Mehrere Zacken werden als Zackenabschnitt bezeichnet und die mehreren Zacken sind über einen Basisabschnitt des Hinterkantenkamms miteinander verbunden. Jedenfalls für den Basisabschnitt wird vorgeschlagen, dass dieser vorzugsweise im Wesentlichen gleichbleibend flach ist.

Das Verfahren schlägt nun hierfür vor, die aufgesetzte Hinterkante im Bereich ihres Zwischenabschnitts aufzuschneiden, also so dass der Hohlraum geöffnet wird. Der Hinterkantenkamm wird dann mit seinem Basisabschnitt in den so geöffneten Hohlraum zwischen Oberseite und Unterseite eingesteckt. Hierdurch konnte der Hinterkantenkamm ergänzt werden. Ggf. kann zusätzlich die Verbindung zwischen der Hinterkante und dem eingesteckten Hinterkantenkamm mittels Klebstoff erhöht bzw. gesichert werden. Vorzugsweise ist die Hinterkante aus PVC gefertigt und ein zu verwendender Klebstoff ist an dieses PVC angepasst. Vorzugsweise ist dieser auch an den Hinterkantenkamm angepasst, der vorzugsweise aus einem glasfaserverstärktem Kunststoff gefertigt sein kann.

Gemäß einer Ausgestaltung wird vorgeschlagen, dass das längsseitige Aufschneiden der aufgesetzten Hinterkante so erfolgt, dass der Endabschnitt und/oder ein Endstreifen mit vorbestimmter Breite im Bereich des Endabschnitts abgeschnitten wird. So erfolgt, bezogen auf einen Querschnitt des Profils, ein längsseitiges Abschneiden der Profilspitze so, dass der Hohlraum auf der gesamten vorgesehenen Linie bzw. Länge geöffnet wird. Bei bekannter Abmessung, also bekannter Geometrie der aufgesetzten Hinterkante, wovon in der Regel ausgegangen werden kann, wird durch das Abschneiden eines Endstreifens mit vorbestimmter Breite auch eine gleichmäßige Öffnung, nämlich ein etwa gleichmäßiger Öffnungsschlitz zu dem Hohlraum des Zwischenabschnitts erreicht. Außerdem wird auch eine bekannte und Längsrichtung etwa gleiche Tiefe des Hohlraums von dem Öffnungsschlitz zum Ende des Hohlraums erreicht. Der Hinterkantenkamm kann somit auf einfache Art und Weise in den so geöffneten Hohlraum eingeschoben werden und wird dadurch gleichermaßen gleichmäßig in diesen Hohlraum und damit an das Rotorblatt angesetzt.

Durch das Vorsehen von Klebstoff, der vorzugsweise in den Hohlraum eingebracht wird, bevor der Hinterkantenkamm in diesen Hohlraum eingesetzt wird, kann eine feste Verbindung und zusätzlich ein fester Sitz erreicht werden. Um einen Übergang von der aufgesetzten Hinterkante zu dem eingesetzten Hinterkantenkamm zu erreichen, nämlich zu dem nach hinten hinausragenden Zackenabschnitt des Hinterkantenkamms, wird die Hinterkante in ihrem abgeschnittenen Bereich angefast. Somit ergeben sich zwei angefaste Bereiche oder Wände der angesetzten Hinterkante, die zwischen sich den Hinterkantenkamm wie in einer Zange aufnehmen.

Das Vorsehen eines solchen angeschrägten oder angefasten Bereichs wird unmittelbar beim Abschneiden bzw. durch das Abschneiden erreicht, oder es wird durch einen separaten Arbeitsschritt erreicht.

Vorzugsweise kann der durch das Aufschneiden geöffnete Hohlraum zu seiner Öffnung zum Einstecken des Hinterkantenkamms hin aufweiten, insbesondere von innen V-förmig angeschliffen werden. Hierdurch wird zum einen das Einsetzen des Hinterkantenkamms erleichtert, zum anderen kann die entstandene Öffnung an die Dicke des Hinterkantenkamms, insbesondere im Bereich seines Basisabschnitts, angepasst werden. Dadurch wird ein zu starkes Aufweiten der angesetzten Hinterkante vermieden und dadurch kann eine gebogene Oberfläche der angesetzten Hinterkante in diesem Bereich vermieden werden. Durch diesen Anschliff des Hohlraums zu seiner Öffnung hin, insbesondere durch einen V-förmigen Anschliff, kann somit die Hafteigenschaft des Klebstoffs der so veränderten Hinterkante positiv beeinflusst werden.

Vorzugsweise weist das Rotorblatt einen Hinterkantenkamm auf, der durch das erfindungsgemäße Verfahren oder gemäß einem der oben beschriebenen Ausführungsformen angebracht wurde.

Zudem wird eine Windenergieanlage vorgeschlagen, die ein Rotorblatt gemäß wenigstens einer der beschriebenen Ausführungsformen aufweist und/oder die einen Hinterkantenkamm gemäß wenigstens einer der beschriebenen Ausführungsformen aufweist.

Vorzugsweise ist der Hinterkantenkamm aus glasfaserverstärktem Kunststoff gefertigt und weist folgende Beschaffenheit auf:

- E-Modul = 8000-12000 N/mm$^2$

- Faservolumenanteil $\phi$ = 0,40 - 0,45
- Belegung: Kurzfaserverstärkt oder +/- 45° Gelege
- Matrix: vorzugsweise EP Epoxy
- Temperaturbeständig bis -40 °C

Nachfolgend wird die Erfindung anhand von Ausführungsformen beispielhaft unter Bezugnahme auf die begleitenden Figuren näher erläutert.

Figur 1    zeigt eine aufsteckbare oder aufgesetzte Hinterkante.

Figur 2    zeigt eine aufsteckbare oder aufsetzbare Hinterkante mit einer zusätzlich aufgesteckten zahnförmigen Kontur, nämlich einem aufgesteckten bzw. eingesteckten Hinterkantenkamm.

Figur 3    zeigt veranschaulichend ein Rotorblatt mit einem Hinterkantenkamm.

Figur 4    zeigt in einer Schnittansicht einen Ausschnitt eines Rotorblatts mit Hinterkantenkamm gemäß dem Stand der Technik.

Figur 5    zeigt schematisch ein Halbzeug zum Fertigen eines Hinterkantenkamms.

Figur 6    zeigt schematisch eine Spitze eines Hinterkantenkamms.

Figur 7    zeigt schematisch einen Hinterkantenzacken in einer Seitenansicht.

Figur 8    zeigt eine Windenergieanlage schematisch in einer perspektivischen Ansicht.

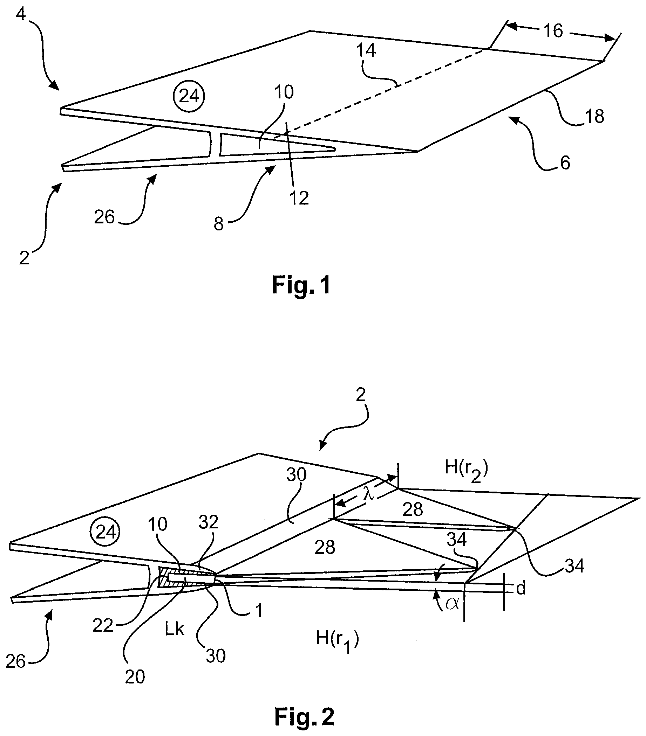

Figur 1 zeigt eine aufsteckbare Hinterkante. Aus dem spitz zulaufenden Verlauf der Hinterkante kann bei Bedarf eine zahnförmige Kontur mit einem geeigneten Schneidverfahren ausgeschnitten werden. Dazu wird vorgeschlagen, einen betroffenen Hohlraum in der Hinterkante zunächst auszufüllen, insbesondere auszuschäumen und nach Aushärten dieser Füllung die gewünschte Kontur hineinzuschneiden. Als Schneidverfahren kommt vorzugsweise ein computer- und robotergesteuertes Schneidverfahren zum Einsatz, wie etwa Wasserstrahlschneiden oder Laserschneiden.

Figur 1 zeigt eine aufsteckbare oder ansetzbare Hinterkante 2, die einen Befestigungsabschnitt 4 und einen Endabschnitt 6 aufweist. Zwischen dem Befestigungsabschnitt 4 und dem Endabschnitt 6 ist ein Zwischenabschnitt 8 mit einem Hohlraum 10 vorhanden. Eine solche Hinterkante 2 kann an einer Endkante eines Rotorblatts angeordnet sein. Um an einem solchen Rotorblatt nun einen Hinterkantenkamm zu ergänzen, wird vorgeschlagen, den Endabschnitt 6 an einer angedeuteten Schnittstelle 12 abzuschneiden. Eine vorgesehene Schnittlinie 14 ist gestrichelt eingezeichnet. Ein Schnittabstand 16 zwischen der Schnittlinie 14 und einer Endkante 18 der Hinterkante ist dabei konstant zu halten.

Figur 2 zeigt somit eine aufsteckbare Hinterkante mit einer zusätzlich aufgesteckten zahnförmigen Kontur. Die aufsteckbare Hinterkante weist im spitz zulaufenden Bereich eine Nut auf, in die das weitere Teil einer zahnförmigen Kontur aufgesteckt werden kann. Ein derartiger Aufbau einer Hinterkante hat den Vorteil, dass eine zunächst gerade Hinterkante - wie etwa gemäß Figur 1 - auf leichte Weise mit verschiedenen aufsteckbaren zahnförmigen Konturen nachgerüstet werden kann. Hierzu muss nur der hintere Teil der Hinterkante gemäß Figur 1 mit einem geeigneten Schneidverfahren längs der Hauptholmrichtung derart abgeschnitten werden, dass sich die in Figur 2 gezeigte Nut bildet, in die dann das weitere Teil einer zahnförmigen Kontur aufgesteckt werden kann.

Figur 2 zeigt somit für die Hinterkante 2 den abgeschnittenen Zustand, wenn wie in Figur 1 veranschaulicht entlang der dort gezeigten Schnittlinie 14 der Endabschnitt 6 abgeschnitten wird. Der Hohlraum 10 öffnet sich dadurch und ermöglicht das Einstecken eines Hinterkantenkamms 1. In dem Hohlraum 10, von dem in Figur 2 nun nur noch ein Teil übrig geblieben ist, wobei zur Vereinfachung der Erläuterung das Bezugszeichen 10 für diesen Hohlraum beibehalten wurde, nimmt somit einen Basisabschnitt 20 des Hinterkantenkamms 1 auf. Außerdem ist in dem Hohlraum 10 noch ein Klebstoff 22 dargestellt, der somit den Hinterkantenkamm in dem geöffneten Hohlraum 10 fixiert.

Die Hinterkante 10 weist zudem eine Saugseite 24 und eine Druckseite 26 auf. Der Hinterkantenkamm 1 weist zudem nach hinten, nämlich gemäß Figur 2 nach rechts, diverse Zacken 28 auf, von denen zwei in der Figur 2 gezeigt sind. Für einen strömungstechnisch günstigen Übergang von der Saugseite 24 bzw. Druckseite 26 der Hinterkante 2 zum eingesteckten Hinterkantenkamm 1 ist zudem sowohl an der Saugseite 24, als auch an der Druckseite 26 je eine Anschrägung bzw. Anfasung 30 vorgesehen. In dem Hohlraum 10 ist u.a. auch in der Nähe dieser Anfasungen Spachtelpaste 32 vorgesehen, um einen vorteilhaften Halt für den eingesetzten Hinterkantenkamm 1 bzw. ggf. auch das Verschließen von Fugen zu erreichen.

Der Hinterkantenkamm 1 ist vorzugsweise aus einer Faserverbundplatte mit konstanter oder variabler Dicke d gefertigt, insbesondere geschnitten. Die Tiefe, also der Abstand jeweils von einer Zackenspitze 34, bis zum Hohlraum 10, insbesondere bis zur Verklebung 22, ist ebenfalls annähernd konstant. Diese Tiefe kann sich aber entlang der Rotorlänge allmählich ändern, so dass dann eine unterschiedlich Tiefe entstehen kann. Die Tiefe zweier benachbarter Zacken ist aber annähernd konstant.

Die Zacken 28 können jedoch flach zu laufen, was durch den Winkel $\alpha$ angedeutet ist. Das Verhältnis der Zackenhöhe H zur Zackenbreite $\lambda$ beträgt vorzugsweise etwa 4. Ein jeder Zacken ist also etwa 4-mal so lang wie breit. Figur 2 veranschaulicht zwei Höhen H für unterschiedliche Radiuspositionen am zugehörigen Rotorblatt, nämlich die Radien $r_1$ und $r_2$.

Für die Auslegung der Dicke des Halbzeugs, aus dem die Hinterkantenzacken ausgeschnitten werden, wird findet folgendes Vorgehen Anwendung. Für einen repräsentativen Profilschnitt aus dem radialen Rotorblattbereich, in dem Hinterkantenzacken angebracht werden, wird eine zweidimensionale Strömungssimulation für den Auslegungsbetriebszustand des Blattes durchgeführt. Für diesen Betriebszustand und Ort werden die aerodynamischen Parameter effektiver Anstellwinkel, Anströmmachzahl und Reynoldszahl vorgegeben und mit der Simulation der Druckverlauf um das Profil ermittelt. Aus der Druckdifferenz $\Delta p$ zwischen Druck und Saugseite bei 95% der Profiltiefe wird eine Streckenlast $q(H_0)$ ermittelt, welche dem linksseitigen Startwert einer linear auf Null abnehmenden Streckenlast auf dem Hinterkantenkamm der Breite b entspricht:

$$q(h_0) \cdot b = \Delta p$$

Diese Streckenlast wird einem linksseitig eingespannten Kragbalken mit rechteckigem Querschnitt und der Länge H als Last beaufschlagt, um mit der linearen Theorie die Funktion f für die Durchbiegung anzusetzen:

$$f = \frac{q(H_0) \cdot H^4}{30EI}$$

Dieses Kragbalkenmodell entspricht dem einzelnen Zacken. Der rechteckige Querschnitt hat ein Flächenträgheitsmoment von:

$$I = \frac{b \cdot d^3}{12}$$

Mit der Dicke d und der Breite b. E beschreibt den Elastizitätsmodul des gewählten Materials. Führt man diese Formeln zusammen und löst nach der gesuchten Dicke des Halbzeugs d, d.h. der Materialstärke auf ergibt sich:

$$d = \sqrt[3]{\frac{2 \cdot \Delta p \cdot H^4}{5 \cdot E \cdot f}}$$

Ziel der Auslegung ist eine möglichst steife Auslegung für den Hinterkantenkamm zu erhalten. Für die maximale Durchbiegung f des freien Endes des betreffenden Zackens wird in einer bevorzugten Ausführung 0,1mm für den längsten Zacken des Hinterkantenkamms gefordert. Bei weicherer Auslegung sollte die Durchbiegung f 1mm aber nicht übersteigen.

Setzt man in einer bevorzugten Ausführung

$\Delta p=11N/m^2$, die Zackenlänge H=0.3m, E=10000N/mm2 und f=0.1mm ein, ergibt sich eine Dicke d von etwa 3mm. Insgesamt sollte die Dicke des Halbzeuges 5mm nicht überschreiten.

Da die Zacken dreieckige Form haben, nimmt die Luftlast zur Spitze hin auf null ab. Daher kann die Halbzeugdicke entsprechen auf null abnehmen. Aus Gründen der Handhabbarkeit soll die Dicke d am Zackenende 1mm nicht unterschreiten. Bei Faserverbundaufbau wird ausgehend von der längsten Mittenlage symmetrisch nach Außen geschäftet, d.h. von der Einspannstelle mit abnehmenden Lagenbreiten der dreieckige Querschnitt angenähert. Extrusionsprofile erhalten diesen Querschnitt durch die Verwendete Matrize.

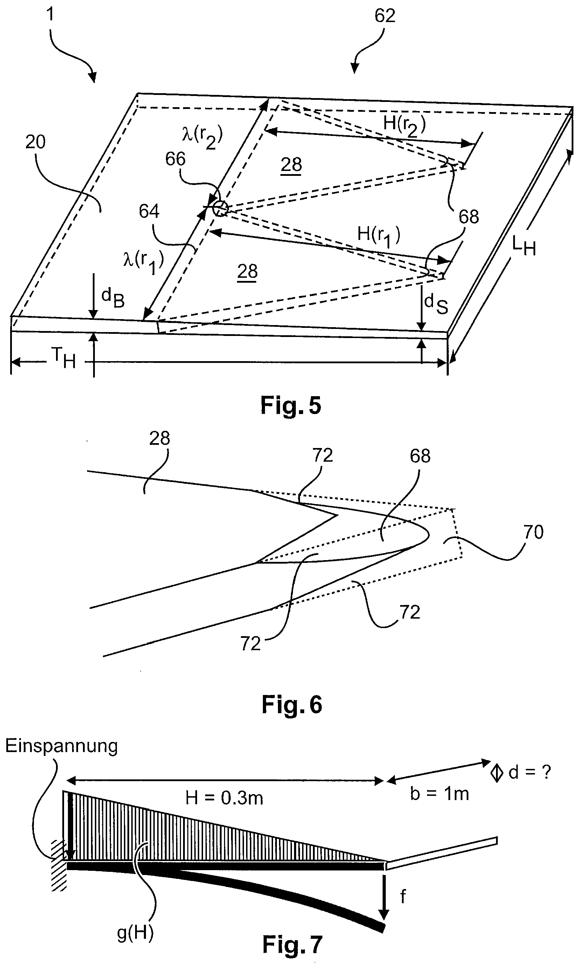

Die verwendeten Größen werden auch in der Figur 7 veranschaulicht, die somit diese Abschätzungsrechnung erläutert. Als Breite b wurde 1m gewählt, wobei sich dieser Wert bei der Berechnung wieder heraus kürzt und insoweit im Grunde beliebig gewählt werden könnte.

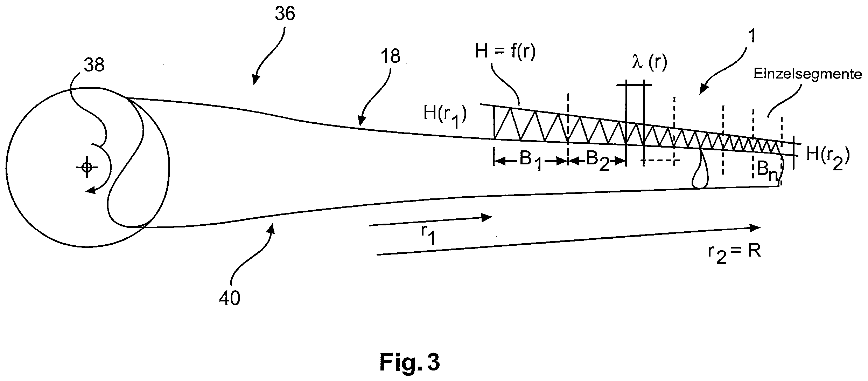

Figur 3 veranschaulicht ein Rotorblatt 36 in einer perspektivischen Ansicht, zu dem eine bestimmungsgemäß Drehrichtung 38 eingezeichnet ist. Das Rotorblatt 36 weist dementsprechend eine Vorderkante 40 und eine Hinterkante bzw. Endkante 18 auf. An der Endkante 18 bzw. im Bereich der Endkante 18 ist veranschaulicht dargestellt, dass ein Hinterkantenkamm 1, der sich in Details aber von dem Hinterkantenkamm 1 der Figur 2 unterscheiden kann, beispielhaft in sechs Segmente mit der Breite $B_1$, $B_2$ bis $B_n$ unterteilt ist. Abhängig von der konkreten Radiusposition am Rotorblatt, für den hier beispielhaft $r_1$ und $r_2$ angegeben sind, ergibt sich die Höhe H, nämlich als Funktion von dem Radius r:

$$H = f(r).$$

Ebenfalls ergibt sich eine Breite $\lambda$, die von dem Radius r abhängt:

$$\lambda = f(r).$$

Der Hinterkantenkamm 1 kann somit segmentweise für jede Breite B eingesetzt werden und diese Segmente können sich in ihrer Breite und/oder der Höhe H der einzelnen Zacken unterscheiden. In den gezeigten Beispielen entspricht der Radius $r_2$ dem maximalen Radius R des Rotorblatts.

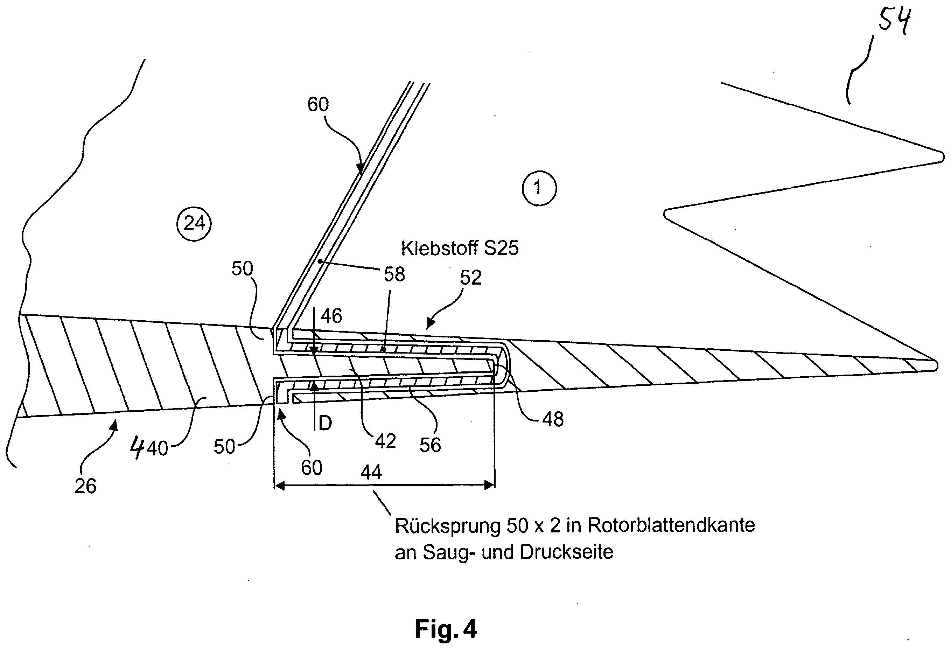

Figur 4 zeigt eine andere Art der Anbindung eines Hinterkantenkamms 1 und auch einen anderen Hinterkantenkamm 1, als dies in Figur 2 gezeigt ist, wobei das gleiche Bezugszeichen zur Vereinfachung des Vergleichs beibehalten wurde gemäß dem Stand der Technik. Ebenso werden teilweise andere Bezugszeichen beibehalten und dem Fachmann wird sofort erkenntlich sein, dass es sich gleichwohl nicht um identische aber um funktional ähnliche Elemente handelt.

Figur 4 zeigt dabei, dass im Bereich einer Rotorblattendkante 440 Material in zwei Streifen so abgefräst wurde, dass sich ein Federabschnitt oder Stegabschnitt 42 ergibt bzw. dass ein solcher Federabschnitt 42 verbleibt. Grundsätzlich kann der Federabschnitt 42 aber auch anders erstellt werden.

Der Federabschnitt 42 weist eine Länge 44 auf, die auch als Rücksprung bezeichnet wird. Der Federabschnitt 42 weist eine Dicke D auf, die zur besseren Bezugnahme auch mit dem Bezugszeichen 46 versehen, und die von der Endkante 440 zu einer Federkante 48 hin etwas abnimmt, nämlich im gezeigten Beispiel um etwas weniger als die Hälfte.

Figur 4 veranschaulicht auch, dass durch das Vorsehen dieses Federabschnitts 42 eine Stufe 50 sowohl zur Saugseite 24, als auch zur Druckseite 26 ausgebildet ist. Die Länge 44 des Federabschnitts 42 ist hierbei der Abstand zwischen der Stufe 50 und der Federkante 48. Gemäß einem Beispiel beträgt die Länge 44 des Federabschnitts 42 etwa 50mm mit einer durchschnittlichen Dicke D vom 2mm. Der aufgesetzte Hinterkantenkamm 1 weist einen Nutabschnitt 52 und einen Endabschnitt 54 auf. Von dem Nutabschnitt 52 zum Endabschnitt 54 läuft der Hinterkantenkamm 1 flach aus.

Der Nutabschnitt 52 weist eine Nut 56 auf, mit der er auf den Federabschnitt 42 aufgesetzt ist. Die Nut 56 ist dabei im Wesentlichen an den Federabschnitt 42 angepasst, insbesondere reziprok bzw. komplementär dazu ausgebildet. Dabei ist die Nut etwas größer als der darin eingesetzte Federabschnitt 42 ausgebildet, so dass Raum für einen Klebestoff 58 ist. Der Klebstoff 58 füllt außerdem jeweils eine Fuge 60 zwischen Hinterkantenkamm 1 und der Stufe 50, nämlich eine Fuge im Abschluss an die Saugseite 24 bzw. im Abschluss an die Druckseite 26. Der Klebstoff 58 kann somit den Hinterkantenkamm 1, der auf den Federabschnitt 42 aufgesetzt ist, dort verkleben und dadurch fixieren. Außerdem kann er die beiden Fugen 60 schließen und es ist ein glatter Übergang zwischen Saugseite 24 bzw. Druckseite 26 zum Hinterkantenkamm erreichbar.

Figur 5 zeigt schematisch veranschaulichend ein Halbzeug 62 zum Fertigen eines Hinterkantenkamms. Ein solches Halbzeug kann bspw. eine Halbzeugtiefe $T_H$ von 0,3m und eine Halbzeuglänge $L_H$ von 1m aufweisen. Figur 5 ist insoweit nur illustrierend und erläutert das Halbzeug 62 zum Herstellen eines Hinterkantenkamms 1 nur für einen Hinterkantenkamm bzw. einen Hinterkantenkammabschnitt mit zwei Zacken 28. Üblicherweise wird ein Hinterkantenkamm 1 mit deutlich mehr Zacken 28 aus einem Halbzeug 62 gefertigt, bspw. 20 Zacken 28. Die Erläuterung anhand der Figur 5 ist auch für solche Hinterkantenkämme mit sehr vielen Hinterkantenzacken 28 anwendbar.

Das Halbzeug 62 kann bspw. aus einem glasfaserverstärktem Material gefertigt sein. Ein Hinterkantenkamm 1 mit einem Basisabschnitt 20 und Zacken 28 wird aus diesem Halbzeug 62 geschnitten, wie bspw. durch ein Wasserschneidverfahren oder dergleichen. Das Halbzeug 62 weist hierbei im Bereich des zu fertigenden Basisabschnitts 20 eine Plattendicke $d_B$ auf und es weist an einer dazu abgewandten Seite im Bereich der Spitzen der zu fertigenden Zacken 28 als zweite Dicke $d_S$, eine Spitzendicke $d_S$ auf. Die Dicke des Halbzeugs kann sich dabei von der Basisdicke $d_B$ bis zur Spitzendicke $d_S$ verringern. Gemäß einer bevorzugten Ausführungsform vermindert sich die Dicke von 3mm der Basisdicke $d_B$ zu 1mm der Spitzendicke $d_S$.

In Längsrichtung, also entlang der Halbzeuglänge $L_H$, bleibt die Dicke vorzugsweise konstant.

Der aus diesem Halbzeug 62 zu fertigende, insbesondere zu schneidende Hinterkantenkamm ist im Bereich seiner Zacken 28 gestrichelt gezeigt. Die beiden Zacken 28 können dabei unterschiedliche Höhen H aufweisen, was in der Figur 5 auch angedeutet ist. Bezogen auf eine Zackengrundlinie 64, die eine reine Hilfslinie darstellt und in Figur 5 gepunktet dargestellt ist, weist der eine Zacken eine Höhe $H(r1)$ auf und der andere Zacken eine Höhe $H(r2)$. Der Radius r1 bzw. r2 bezieht sich dabei auf einen Radius des aerodynamischen Rotors der Windenergieanlage für die bestimmungsgemäße Position des zu fertigenden Hinterkantenkamms. Auch die Breite $\lambda(r1)$ bzw. $\lambda(r2)$ hängt vorzugsweise von dem Radius r1 bzw. r2 des Rotors ab. Vorzugsweise beträgt das Verhältnis der Höhe H zur Breite $\lambda$ der jeweiligen Zacke 28 etwa den Wert 4.

Figur 5 hat auch noch eine Grundlinienbohrung 66 veranschaulicht, die vorgeschlagen wird, um ein Einreißen des Basisabschnitts 20 in diesem Bereich, nämlich durch das vorzusehende Ausschneiden der Zacken 28 zu vermeiden. Vorzugsweise ist eine solche Grundlinienbohrung 66 auf der Zackengrundlinie 64 zwischen jedem Zacken 28 vorzusehen.

Außerdem ist für die Zacken 28 eine Zackenrundung 68 angedeutet. Durch die Verwendung des Halbzeugs 62 mit abnehmender Dicke nimmt somit auch eine entsprechende Dicke jedes Zackens 28 von der Zackengrundlinie 64 zur Zackenrundung 68 ab.

Figur 6 zeigt schematisch in einer Vergrößerung die Spitze eines Zackens 28 im Bereich einer Zackenrundung 68. Gestrichelt ist noch eine bisherige Zackenspitze 70 angedeutet, die durch das Vorsehen einiger Fasen 72 im Grunde abgetragen wurde und auch abgerundet wurde, so dass die gezeigte Zackenrundung 68 entstanden ist. Es ist auch möglich und vorteilhaft, wenn solche Fasen 72 an der gesamten Zacke 28 bis zum entsprechenden Basisabschnitt 20 vorgenommen werden, allerdings erfordert dies einen hohen Aufwand und das Vorsehen einer Fase nur im Bereich der Zackenspitze 70 stellt eine Lösung dar, die gute, insbesondere aerodynamische Eigenschaften bei vertretbarem Aufwand schafft.

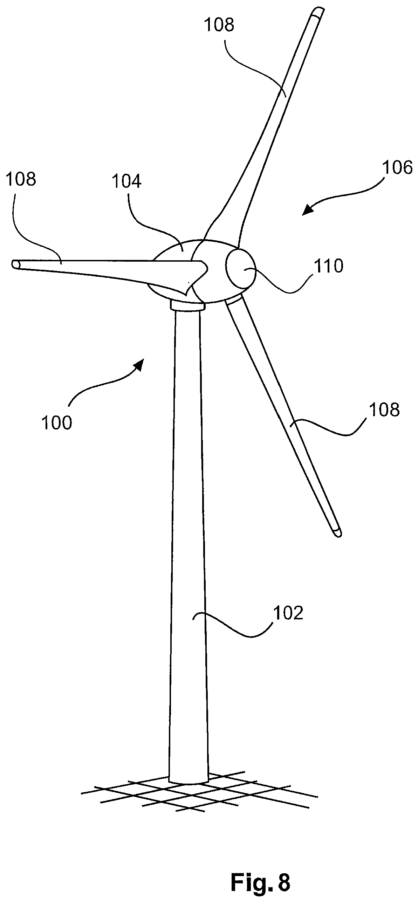

Figur 8 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Die Darstellung zeigt dabei ganz schematisch eine Windenergieanlage, die auch der vorliegenden Erfindung zugrundeliegt, bei der aber aufgrund der schematischen Darstellung ein Hinterkantenkamm an der Windenergieanlage vereinfachend nicht dargestellt ist.

**Patentansprüche**

1. Verfahren zum Anbringen eines Hinterkantenkamms (1) an ein eine aufgesetzte Hinterkante (2) aufweisendes Rotorblatt (36), wobei

   - die aufgesetzte Hinterkante (2) als Profil ausgebildet ist mit
   - einem Befestigungsabschnitt (4), mit dem die Hinterkante (2) im Bereich einer Endkante (18) an dem Rotorblatt (36) angesetzt ist,
   - einem dem Befestigungsabschnitt (4) abgewandten Endabschnitt (6), zu dem hin das Profil flach ausläuft, und
   - einem zwischen dem Befestigungsabschnitt (4) und dem Endabschnitt (6) ausgebildeten Zwischenabschnitt mit einem Hohlraum (10) zwischen einer Saugseite (24) und einer Druckseite (26) der Hinterkante (2),
   - und der Hinterkantenkamm (1) als Flachteil ausgebildet ist mit
   - einem Zackenabschnitt, der mehrere Zacken (28) aufweist, und
   - einem Basisabschnitt (20), über den die Zacken (28) miteinander verbunden sind,

   umfassend die Schritte:

   - längsseitiges Aufschneiden der aufgesetzten Hinterkante (2) im Bereich ihres Zwischenabschnitts, so dass der Hohlraum (10) geöffnet wird, und
   - Einstecken des Hinterkantenkamms (1) mit seinem Basisabschnitt (20) in den so geöffneten Hohlraum (10) zwischen die Saugseite (24) und die Druckseite (26).

2. Verfahren nach Anspruch 1,
   **dadurch gekennzeichnet, dass**
   das längsseitige Aufschneiden der aufgesetzten Hinterkante (2) so erfolgt, dass der Endabschnitt (6) und/oder ein Endstreifen mit vorbestimmter Breite im Bereich des Endabschnitts (6) abgeschnitten wird.

3. Verfahren nach Anspruch 1 oder 2,
   **dadurch gekennzeichnet, dass**
   die aufgesetzte Hinterkante (2) in dem Bereich, in dem der Hinterkantenkamm (1) eingesetzt wird, angefast wird bzw. so abgeschnitten wird, dass sie in dem Bereich angefast ist.

**4.** Verfahren nach einem der Ansprüche 1 bis 3, **dadurch gekennzeichnet, dass** vor dem Einstecken des Basisabschnitts (20) Klebstoff in den Hohlraum (10) eingefüllt wird und/oder der Hohlraum (10) zu seiner Öffnung zum Einstecken des Hinterkantenkamms (1) hin aufweitend, insbesondere von innen V-förmig angeschliffen wird.

**5.** Rotorblatt (36) einer Windenergieanlage mit einem Hinterkantenkamm (1), wobei das Rotorblatt (36) einen durch ein Verfahren gemäß einem der Ansprüche 1 bis 4 angebrachten Hinterkantenkamm (1) aufweist.

**6.** Windenergieanlage mit wenigstens einem Rotorblatt (36) gemäß Anspruch 5.

**Claims**

**1.** A method for mounting a rear edge ridge (1) onto a rotor blade (36) having a fitted rear edge (2), wherein:

- the fitted rear edge (2) is formed as a profile having
- a fastening section (4), with which such rear edge (2) is applied to the rotor blade (36) in the area of a trailing edge (18);
- an end section (6) that faces away from such fastening section (4) and towards which the profile flattens out, and
- an intermediate section that is arranged between the fastening section (4) and the end section (6), having a cavity (10) between one suction side (24) and one pressure side (26) of the rear edge (2);
- the rear edge ridge (1) is formed as a flat component having
- a spike section with several spikes (28), and
- a base section (20), via which the spikes (28) are connected to each other, comprising the steps of:
- cutting open the fitted rear edge (2) lengthwise in the area of its intermediate section such as to open the cavity (10), and
- inserting the base section (20) of the rear edge ridge (1) into the thus opened cavity (10) between suction side (24) and pressure side (26).

**2.** A method according to claim 1, **characterized in that** the fitted rear edge (2) is cut open lengthwise such as to cut off the end section (6) and/or an end strip with predefined width in the area of the end section (6).

**3.** A method according to claim 1 or 2, **characterized in that** the fitted rear edge (2) is chamfered or cut off such in the area, where the rear edge ridge (1) is inserted, that it is chamfered in such area.

**4.** A method according to one of the claims 1 through 3, **characterized in that** an adhesive is placed in the cavity (10) before the base section (20) is inserted, and/or the cavity (10) is chamfered, in particular in V-shape from the inside, towards its opening to allow for insertion of the rear edge ridge.

**5.** A rotor blade (36) of a wind turbine having a rear edge ridge (1), wherein the rotor blade (36) has a rear edge ridge (1) that has been mounted by a method according to one of the claims 1 through 4.

**6.** Wind turbine having at least one rotor blade (36) according to claim 5.

**Revendications**

**1.** Procédé d'installation d'une dentelure de bord de fuite (1) sur une pale de rotor (36) présentant un bord de fuite (2) placé, dans lequel

- le bord de fuite (2) placé est réalisé en tant que profil avec
- une section de fixation (4), par laquelle le bord de fuite (2) est placé sur la pale de rotor (36) dans la zone d'un bord d'extrémité (18);
- une section d'extrémité (6) opposée à la section de fixation (4), en direction de laquelle le profil se finit de manière plate, et
- une section intermédiaire, réalisée entre la section de fixation (4) et la section d'extrémité (6), avec une cavité (10) entre un extrados (24) et un intrados (26) du bord de fuite (2);
- et la dentelure de bord de fuite (1) est réalisée en tant que partie plate, avec
- une section à pics qui présente plusieurs pics (28), et
- une section de base (20), par l'intermédiaire de laquelle les pics (28) sont reliés les uns aux autres,

comprenant les étapes:

- de découpage côté longitudinal du bord de fuite (2) placé dans la zone de sa section intermédiaire de sorte que la cavité (10) est ouverte, et
- d'enfichage de la dentelure de bord de fuite (1) avec sa section de base (20) dans la cavité (10) ainsi ouverte entre l'extrados (24) et l'intrados (26).

**2.** Procédé selon la revendication 1,

**caractérisé en ce que**
le découpage côté longitudinal du bord de fuite (2) placé a lieu de telle sorte que la section d'extrémité (6) et/ou une bande d'extrémité sont découpées à la bonne longueur avec une largeur prédéfinie dans la zone de la section d'extrémité (6).

3. Procédé selon la revendication 1 ou 2,
   **caractérisé en ce que**
   le bord de fuite (2) placé est chanfreiné dans la zone, dans laquelle la dentelure de bord de fuite (1) est insérée, ou est découpé à la bonne longueur de telle sorte qu'il est chanfreiné dans la zone.

4. Procédé selon l'une quelconque des revendications 1 à 3,
   **caractérisé en ce que**
   de la colle est transvasée dans la cavité (10) avant l'enfichage de la section de base (20) et/ou la cavité (10) est affûtée en particulier en forme de V à l'intérieur, de manière à s'élargir vers son ouverture pour l'enfichage de la dentelure de bord de fuite (1).

5. Pale de rotor (36) d'une éolienne avec une dentelure de bord de fuite (1), dans laquelle
   la pale de rotor (36) présente une dentelure de bord de fuite (1) installée par un procédé selon l'une quelconque des revendications 1 à 4.

6. Eolienne avec au moins une pale de rotor (36) selon la revendication 5.

**Fig. 1**

**Fig. 2**

**Fig. 3**

Fig. 4

**Fig. 5**

**Fig. 6**

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0652367 A1
- EP 1019632 A
- EP 1314885 B1
- WO 2011157849 A2
- US 20080187442 A1
- EP 1338793 A2
- EP 0652367 A